# EUROPEAN PATENT APPLICATION

(11) **EP 2 575 283 A1**
(43) Date of publication of application: **03.04.2013**
(21) Application number: 11306271.5
(22) Date of filing: 30.09.2011
(51) Int. Cl.: H04L 5/00, H04W 74/00, H04W 74/08

(54) **PRACH procedure on Scell for mobile communication systems using carrier aggregation**

(71) Applicant: Alcatel Lucent, 75007 Paris (FR)
(72) Inventor: Lim, Seau Sian, Swindon, Wiltshire SN1 4GU (GB); Baker, Matthew, Canterbury, Kent CT2 9DB (GB)
(74) Representative: 2SPL Patentanwälte

(57) **Abstract**

Embodiments provide methods, apparatuses and computer programs for a mobile transceiver (100) and for a base station transceiver (200) in a mobile communication system. The mobile transceiver apparatus (10) comprises means for receiving (14) a control message on the first frequency layer by searching through a predetermined common set of decoding combinations and by searching through a predetermined specific set of decoding combinations of the first frequency layer, the control message comprises a random access response or data format information. The mobile transceiver comprises means for transmitting (12) a random access message. The means for receiving (14) is further adapted to receive on the second frequency layer another control message associated with the random access message by searching through a predetermined common set of decoding combinations of the second frequency layer and by searching through a predetermined specific set of decoding combinations of the second frequency layer. The specific set of decoding combinations on the second frequency layer comprises fewer decoding combinations than the specific set of combinations on the first frequency layer. The base station transceiver apparatus (20) is adapted accordingly.

## Description

Embodiments of the present invention relate to mobile communications, more particularly to coding concepts for mobile communication systems using carrier aggregation.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. One of the mobile communication systems currently under standardization is the Long Term Evolution (LTE) system, the LTE-Advanced (LTE-A) system, respectively.

In LTE, each data transmission is usually signaled to a mobile transceiver or User Equipment (UE) via a control channel known as the Physical Downlink Control CHannel (PDCCH). Since the UE is not aware in advance of the exact format of the PDCCH, nor the exact transmission resources used for it, it has to perform multiple blind decodings of different possibilities in each sub-frame to check for the presence of a PDCCH addressing said UE.

With the introduction of Carrier Aggregation (CA), i.e. increasing the bandwidth by aggregating the bandwidth of different component carriers in Release 10 (Rel-10) of LTE, the main concern about separate PDCCHs, one separate PDCCH for each component carrier, is the increase in the blind decoding effort of a UE. In Release 8 of LTE, a UE monitoring the PDCCH needs to do 44 blind decoding attempts per sub-frame, which are arranged in two sets of transmission resources or coding combinations known as "search spaces", one is referred to as the Common Search Space (CSS), as it is shared between multiple UEs, and the other is referred to as UE Specific search Space (UESS). The number of blind decodes in the CSS in Release 8 is 12, while in the UESS it equals 32. When increasing the bandwidth using up to five component carriers, one of which is provided by a Primary serving Cell (PCell) and four are provided by four Secondary serving Cells (SCell), the number of blind decoding attempts would increase linearly to 220 without any extra measures. Hence, in Release 10 of LTE, it was decided to limit the SCell PDCCH decoding to just the UE specific search space which reduces the PDCCH blind decoding to 172, which subdivides in 44 attempts on the PCell and up to 4 SCells each contributing 32 decoding attempts.

### Summary

Embodiments are based on the finding that in addition to normal data transmissions, responses to the Physical Random Access CHannel (PRACH) transmissions are also signaled via the PDCCH and that PDCCH messages indicating PRACH responses can be sent in the common search space. In Release 10 of LTE, PRACH is only performed on the PCell and hence the peak number of blind decodes is maintained at 172.

In Release 11 of the LTE, with the introduction of multiple Timing Advances (TA), i.e. the UE can now synchronize to multiple carriers in a CA scenario, it is also possible for the UE to perform a random access on a SCell. It is a further finding of embodiments that in this case, the common search space would need to be searched at least when the PRACH is performed on the SCell. This would mean increasing the blind decoding attempts by another 12 per SCell. Therefore, it is a finding that if parallel PRACHs on SCells need to be handled, it will potentially increase the blind decoding attempts by another 48, assuming a maximum of 4 SCells. Therefore, embodiments of the present invention are based on the finding that it is desirable to reduce the number of blind decoding attempts when a random access on PRACH is performed on the SCell.

It is a further finding that when using the PCell PDCCH to cross-schedule a RACH on an SCell the number of blind decodes can be maintained at the same level as with CA (i.e. 172), however, modifications on the random access procedure would be required. For example, a modification to unify a UE's identification across the multiple carriers would be necessary. E.g. the Random Access - Radio Network Temporary Identifier (RA-RNTI) is used on the PDCCH when Random Access Response (RAR) messages are transmitted. The RA-RNTI is used by the UE to identify its RAR message after sending the RA preamble and is based on a RA preamble resource used for the preamble transmission in terms of frequency and time. However, as the RA-RNTI is only unique within a cell, it is not unique when it is also applied to cross carrier scheduling of the RACH as the same frequency and time resources may be used by the cross-scheduling cell and the cell that has been cross-scheduled. Furthermore, the RA Preamble IDentification (RAPID), which is used for random access procedures, would have to be made at least cell specific. Again the RA preambles are only unique to a cell assuming that all preambles can be used within a cell. If the RA-RNTI is not cell specific, the RAPID will have to be unique across the aggregate-able cells. The RA-RNTI and the preamble ID are both identifiers which currently are unique only in the cell in which the PRACH is performed.

It is another finding that when decoding the common search space but not the UE specific search space during the PRACH procedure, the number of blind decoding attempts would be reduced, however, it means that during the Random Access (RA) window, the eNodeB (eNB) cannot schedule any downlink (DL) transmission of the SCell. The RA window is semi-statically configured and can have a value from {2,3,4,5,6,7,8,10} sub-frames. This may impact the DL throughput.

Embodiments are based on the finding that in order to maintain the number of blind decoding attempts when the UE is performing a random access on RACH on a SCell, in which it decodes in the common search space of the SCell, the blind decoding attempts of the UE specific search space of the SCell(s) can be reduced to accommodate the additional number of blind decoding attempts in the common search spaces of the multiple frequency layers on the multiple frequency carriers of the SCells.

Embodiments provide an apparatus for a mobile transceiver in a mobile communication system, i.e. embodiments may provide said apparatus to be operated by or included in a mobile transceiver. In the following, the apparatus will also be referred to as mobile transceiver apparatus. The mobile communication system may, for example, correspond to one of the mobile communication systems standardized by the 3rd Generation Partnership Project (3GPP), as Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Orthogonal Frequency Division Multiple Access (OFDMA), Code Division Multiple Access (CDMA), etc. In the following the terms mobile communication system and mobile communication network are used synonymously.

The mobile communication system is operative at a first frequency layer and at a second frequency layer. For example, in an OFDM system each of the two frequency layers has multiple subcarriers, which are arranged in repetitive radio frames, and each radio frame is subdivided in multiple time slots. In other words, there are two frequency carriers and on each frequency carrier there are radio resources, e.g. time resources in terms of time slots and frequency resources in terms of subcarriers. The time resources are further subdivided into symbols. The mobile transceiver is, for example, located in the coverage area of the first frequency layer and in the coverage area of the second frequency layer. The coverage area of a frequency layer may also be referred to as cell. In other words, the mobile transceiver can be located in two cells of different frequency layers, which can be operated by the same or different base station transceivers.

The term cell refers to a coverage area of radio services provided by a base station transceiver or a NodeB, an eNodeB, respectively. A base station transceiver may operate multiple cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A mobile transceiver can be registered with a cell, i.e. it can be associated to a cell such that data can be exchanged between the network and the mobile in the coverage area of the associated cell. A cell is thus operated by a base station transceiver and can be seen as a coverage area, which can be identified through reference or broadcast channels with a respective identification, as, for example, a pilot channel. Before a mobile transceiver can exchange data with a cell, it has to register or connect with a cell. A mobile transceiver not registered with a cell is in so called idle mode, a registered mobile transceiver is in active or connected mode.

In order for a mobile transceiver to transit from idle to active mode it has to carry out a first access and register with the cell. This first access is also referred to a random access, since the access happens using a "random" resource (e.g. signature and/or time). The base station broadcasts information which the mobile transceiver can receive in idle mode and which comprises parameters on how such a random access is carried out. For example, the base station broadcasts details on a Random Access CHannel (RACH), which the mobile transceiver uses for a random access, i.e. the mobile transceiver is informed about certain radio resources, e.g. subcarriers and time slots, encoding, power ramping etc., to be used for a random access. Moreover, when a mobile transceiver uses multiple frequency layers for transmission, it has to be synchronized to each frequency layer or carrier. Therefore, so called different Timing Advance (TA) values apply to different frequency layers. In other words the TA of a second frequency layer (SCell) is different to the TA of the first frequency layer (PCell). The purpose of the RACH is also to derive the TA of the secondary frequency (SCell). A preamble received by the eNB will be used to calculate the TA. A Random Access Response (RAR) is used to provide the TA to the UE or mobile transceiver.

In embodiments the mobile transceiver apparatus comprises means for transmitting a random access message. The random access message can be transmitted on the first or second frequency layer using a predetermined random access configuration of radio resources. Such information, i.e. which radio resources in terms of time slots and subcarriers are used, which transmission power shall be used etc., can be received by the mobile transceiver on a broadcast channel, e.g. within so called system information blocks.

The mobile transceiver apparatus further comprises means for receiving a control message on the first frequency layer by searching through a predetermined common set of decoding combinations of the first frequency layer, the common set of decoding combinations is shared with other mobile transceivers on the first frequency layer, and by searching through a predetermined specific set of decoding combinations of the first frequency layer, the specific set of decoding combinations is specific to the mobile transceiver on the first frequency layer. The control message comprises a random access response or data format information. In embodiments a random access response may be received within the common set of decoding combinations and the data format information may be received within the predetermined specific set of decoding combinations. In other embodiments it may be vice versa, or a random access response or data format information may be receivable within the common set of decoding combinations and within the predetermined specific set of decoding combinations. The data format information may comprise information on a format or configuration of a data transmission, e.g. Downlink Control Information (DCI).

In other words, the mobile transceiver apparatus tries to decode a response or control message to its prior random access message. In order to do so, it needs to find the correct radio resources, e.g. in terms of a combination of time slots and subcarriers, the correct format of the response message, i.e. format length, coding etc. The format of the response message can be selected by the base station transceiver and it depends on several factors, as e.g. channel conditions, number of simultaneous random access procedures, etc. Therefore, the mobile transceiver apparatus carries out a number of decoding attempts based on a limited set of decoding combinations and tries to find the respective response message. In line with what is described above, the decoding combinations are separated in a common and a specific set. For example, the specific set of decoding combination may be based on an identification, which is unique to the cell of the mobile transceiver, as e.g. the Cell-RNTI (C-RNTI). Therefore, the according decoding combinations are specific for the UE. The common set of decoding combinations can for example be based on the RA-RNTI, which can be re-used for multiple UEs.

In the mobile transceiver apparatus the means for transmitting is adapted to transmit a random access message, which can be on the second frequency layer using a predetermined random access configuration of radio resources of the second frequency layer. In other words, the mobile transceiver may access the second frequency layer and establish a data connection by random accessing the second frequency layer. The means for receiving is further adapted to receive on the second frequency layer another control message associated with the random access message on the second frequency layer by searching through a predetermined common set of decoding combinations of the second frequency layer, the common set of decoding combinations of the second frequency layer is shared with other mobile transceivers on the second frequency layer, and by searching through a predetermined specific set of decoding combinations of the second frequency layer, the specific set of decoding combinations on the second frequency layer is specific to the mobile transceiver on the second frequency layer. The specific set of decoding combinations on the second frequency layer comprises fewer decoding combinations than the specific set of combinations on the first frequency layer. In other words, the number of decoding combinations to be considered by the mobile transceiver on the second frequency layer is less than the number of decoding combinations to be considered by the mobile transceiver on the first frequency layer.

Embodiments also provide an apparatus for a base station transceiver in a mobile communication system, i.e. embodiments may provide said apparatus to be operated by or included in a base station transceiver. In the following, the apparatus will also be referred to as base station transceiver apparatus. The mobile communication system is operative at a first frequency layer and at a second frequency layer. The mobile communication system can correspond to one of the above mentioned communication systems. The base station transceiver is operative in the second frequency layer. The base station transceiver apparatus comprises means for receiving a random access message from a mobile transceiver. In order to receive the random access message, the means for receiving may use a predetermined random access configuration of radio resources of the second frequency layer. In embodiments, the means for receiving can be further adapted to receive an indication on whether the mobile transceiver is active on the first frequency layer. In other words, the base station transceiver apparatus corresponds to the network or system entity in line with the above mobile transceiver apparatus. The indication on whether the mobile transceiver is active on the first frequency layer may be received from the mobile transceiver or from the network or be determined and configured by the base station itself, i.e. if the base station also operates the first frequency layer, the indication may also be received internally from a processing component of the first frequency layer.

The base station transceiver apparatus further comprises means for transmitting a control message on the second layer to the mobile transceiver in line with what was described above. The control message comprises a random access response or data format information. In case the mobile transceiver is configured to process the second frequency layer as a first type of frequency layer or if the mobile transceiver is inactive on the first frequency layer, e.g. if the UE is configured with the second frequency layer as a PCell, the means for transmitting uses an encoding combination from a first common set of encoding combinations of the second frequency layer, the first common set of encoding combinations is shared among multiple mobile transceivers, or it uses a first specific set of encoding combinations of the second frequency layer, the first specific set of encoding combinations is specific to the mobile transceiver. The base station transceiver may then become the PCell of the mobile transceiver.

In case the mobile transceiver is configured to process the second frequency layer as a second type of frequency layer or the mobile transceiver is active on the first frequency layer, e.g. if the UE is configured with the second frequency layer as an SCell, the means for transmitting uses an encoding combination from a second common set of encoding combinations of the second frequency layer, the second common set of encoding combinations is shared among multiple mobile transceivers, or by using a second specific set of encoding combinations of the second frequency layer, the second specific set of encoding combinations is specific to the mobile transceiver. The second specific set of encoding combinations comprises fewer encoding combinations than the first specific set of encoding combinations. The base station transceiver may then become the SCell of the mobile transceiver.

The encoding combination used by the base station transceiver apparatus correspond to the above decoding combinations of the mobile transceiver apparatus.

Embodiments may provide the advantage that no further complications are necessary, as the above explained RA-RNTI and preamble identifier modifications that would come along with cross scheduling. Furthermore, in embodiments, DL scheduling can be carried out simultaneously with the mobile transceiver monitoring for RACH responses.

In embodiments the mobile communication system may correspond to a Long Term Evolution or a Long Term Evolution-Advanced system using the first frequency layer as a first carrier and the second frequency layer as a second carrier. The predefined random access configuration of radio resources of the first frequency layer can correspond to a Physical Random Access CHannel (PRACH) and the common sets of encoding or decoding combinations on the first carrier can correspond to a Common Search Space (CSS) of a Physical Downlink Control CHannel (PDCCH) on the first carrier. The specific set of encoding or decoding combinations on the first carrier can correspond to a User Equipment Specific Search space (UESS) of the PDCCH of the first carrier. The common sets of encoding or decoding combinations on the second carrier can correspond to a CSS of a PDCCH of the second carrier, and the specific sets of encoding or decoding combinations on the second carrier can correspond to a UESS of the PDCCH of the second carrier.

In embodiments, the search spaces may correspond to a number of Control Channel candidates, for example, PDCCH candidates, wherein each candidate may correspond to a number of Control Channel Elements (CCE). A CCE may correspond or may be mapped to a set of combinations of subcarriers and time slots or symbols. There may not be an unambiguous correspondence between CCEs and subcarriers / timeslots, in embodiments it may be done via a complex interleaving and mapping functions. A combination of a subcarrier and a time slot or time symbol may also be referred to as Physical Resource Block (PRB). In some embodiments, each of the two frequency layers has multiple subcarriers, is arranged in repetitive radio frames, and each radio frame is subdivided in multiple time slots, time symbols, OFDM symbols, radio frames, sub-frames, time transmission intervals, etc. A CCE may comprise four consecutive subcarriers in an OFDM symbol and a PDCCH candidate may correspond to a number of aggregated CCEs. To the number of CCEs in a PDCCH candidate it may also be referred to as an aggregation level of the PDCCH candidate.

In some embodiments, the Control CHannel (CCH) candidates, e.g. the PDCCH candidates, for the UESS of the CCH, e.g. the PDCCH, of the second frequency layer (the second UESS at the base station apparatus when acting as SCell), may have fewer format lengths than the CCH candidates for the UESS of the CCH the first frequency layer (the first UESS at the base station apparatus when acting as PCell, respectively). The CCH candidates for the UESS of the CCH of the second frequency layer (the second UESS at the base station apparatus when acting as SCell) may have fewer CCE aggregation levels than the CCH candidates for the UESS of the CCH of the first frequency layer (the first UESS at the base station apparatus when acting as PCell, respectively). In some embodiments there can be fewer CCH candidates for the UESS of the PDCCH of the second frequency layer (the second UESS at the base station apparatus when acting as SCell) than CCH candidates for the UESS of the PDCCH of the first frequency layer (the first UESS at the base station apparatus when acting as PCell, respectively).

Embodiments may further provide a mobile communication system comprising a mobile transceiver with a mobile transceiver apparatus according to the above description and/or a base station transceiver with a base station transceiver apparatus according to the above description.

Embodiments further provide a method for a mobile transceiver in a mobile communication system. The mobile communication system is operative at a first frequency layer and at a second frequency layer and the mobile transceiver can, for example, be located in the coverage area of the first frequency layer and in the coverage area of the second frequency layer. The method may comprise a step of transmitting a random access message on the first frequency layer using a predetermined random access configuration of radio resources of the first frequency layer. The method comprises a step of receiving a control message on the first frequency layer by searching through a predetermined common set of decoding combinations of the first frequency layer, the common set of decoding combinations is shared with other mobile transceivers on the first frequency layer, and by searching through a predetermined specific set of decoding combinations of the first frequency layer, the specific set of decoding combinations is specific to the mobile transceiver on the first frequency layer. The control message comprises a random access response or data format information.

The method comprises a further step of transmitting a random access message. The transmitting of the random access message can be carried out on the second frequency layer using a predetermined random access configuration of radio resources of the second frequency layer. The method comprises a step of receiving on the second frequency layer another control message associated with the random access message by searching through a predetermined common set of decoding combinations of the second frequency layer, the common set of decoding combinations of the second frequency layer is shared with other mobile transceivers on the second frequency layer, and by searching through a predetermined specific set of decoding combinations of the second frequency layer, the specific set of decoding combinations on the second frequency layer is specific to the mobile transceiver on the second frequency layer. The other control message comprises another random access response or other data format information. The specific set of decoding combinations on the second frequency layer comprises fewer decoding combinations than the specific set of combinations on the first frequency layer. Embodiments further provide a method for a base station transceiver in a mobile communication system. The mobile communication system is operative at a first frequency layer and at a second frequency layer. The base station transceiver is operative in the second frequency layer. The method comprises a step of receiving a random access message from a mobile transceiver. The receiving may use a predetermined random access configuration of radio resources of the second frequency layer. The method may comprise an optional step of receiving an indication on whether the mobile transceiver is active on the first frequency layer. The method further comprises a step of transmitting a control message on the second layer to the mobile transceiver. The control message comprises a random access response or data format information. In case the mobile transceiver is inactive on the first frequency layer or the mobile transceiver is configured to process the second frequency layer as a first type of frequency layer, e.g. if the UE is configured with the second frequency layer as a PCell, the transmitting uses an encoding combination from a first common set of encoding combinations of the second frequency layer, the first common set of encoding combinations is shared among multiple mobile transceivers, or the transmitting uses a first specific set of encoding combinations of the second frequency layer, the first specific set of encoding combinations is specific to the mobile transceiver. In case the mobile transceiver is active on the first frequency layer or the mobile transceiver is configured to process the second frequency layer as a second type of frequency layer, e.g. if the UE is configured with the second frequency layer as an SCell, the transmitting uses an encoding combination from a second common set of encoding combinations of the second frequency layer, the second common set of encoding combinations is shared among multiple mobile transceivers, or the transmitting uses a second specific set of encoding combinations of the second frequency layer, the second specific set of encoding combinations is specific to the mobile transceiver. The second specific set of encoding combinations comprises fewer encoding combinations than the first specific set of encoding combinations.

Embodiments further provide a computer program having a program code for performing one of the above described methods, when the computer program is executed on a computer or processor.

### Brief description of the Figures

Some other features or aspects will be described using the following non-limiting embodiments of apparatuses and/or methods and/or computer programs by way of example only, and with reference to the accompanying figures, in which
Figure 1 shows an embodiment of an apparatus for a mobile transceiver;
Figure 2 shows an embodiment of an apparatus for a base station transceiver;
Figure 3 depicts a message sequence chart of a random access in an embodiment;
Figure 4 shows a block diagram of a flow chart of an embodiment of a method for a mobile transceiver; and
Figure 5 shows a block diagram of a flow chart of an embodiment of a method for a base station transceiver.

### Description of some Embodiments

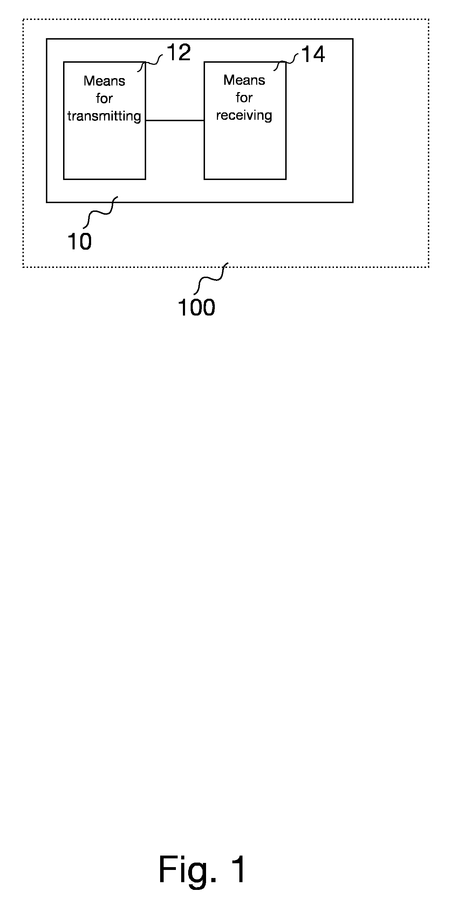

Figure 1 shows an embodiment of an apparatus 10 for a mobile transceiver 100 in a mobile communication system. The mobile transceiver 100 is shown in dotted lines, as it is optional. Embodiments may provide a mobile transceiver 100 comprising a mobile transceiver apparatus 10. The mobile communication system is operative at a first frequency layer and at a second frequency layer and it is assumed to be an LTE network. The mobile transceiver 100 is located in the coverage area of the first frequency layer and in the coverage area of the second frequency layer.

As shown in Figure 1, the mobile transceiver apparatus 10 comprises means for transmitting 12 a random access message, which can be on the first or second frequency layer, for example, using a predetermined random access configuration of radio resources of the first frequency layer. The apparatus 10 also comprises means for receiving 14 a control message on the first frequency layer by searching through a predetermined common set of decoding combinations of the first frequency layer, the common set of decoding combinations is shared with other mobile transceivers on the first frequency layer, and by searching through a predetermined specific set of decoding combinations of the first frequency layer, the specific set of decoding combinations is specific to the mobile transceiver 100 on the first frequency layer. According to Figure 1 the means for transmitting 12 is coupled to the means for receiving 14. The control message comprises a random access response or data format information.

The means for transmitting 12 is adapted to transmit a random access message, which can be on the second frequency layer, for example, using a predetermined random access configuration of radio resources of the second frequency layer. The means for receiving 14 is further adapted to receive on the second frequency layer another control message associated with the random access message by searching through a predetermined common set of decoding combinations of the second frequency layer, the common set of decoding combinations of the second frequency layer is shared with other mobile transceivers on the second frequency layer, and by searching through a predetermined specific set of decoding combinations of the second frequency layer, the specific set of decoding combinations on the second frequency layer is specific to the mobile transceiver 100 on the second frequency layer. The other control message comprises another random access response or other data format information. The specific set of decoding combinations on the second frequency layer comprises fewer decoding combinations than the specific set of combinations on the first frequency layer. The predetermined common sets of decoding combinations on the first and second frequency layers may be equal or different.

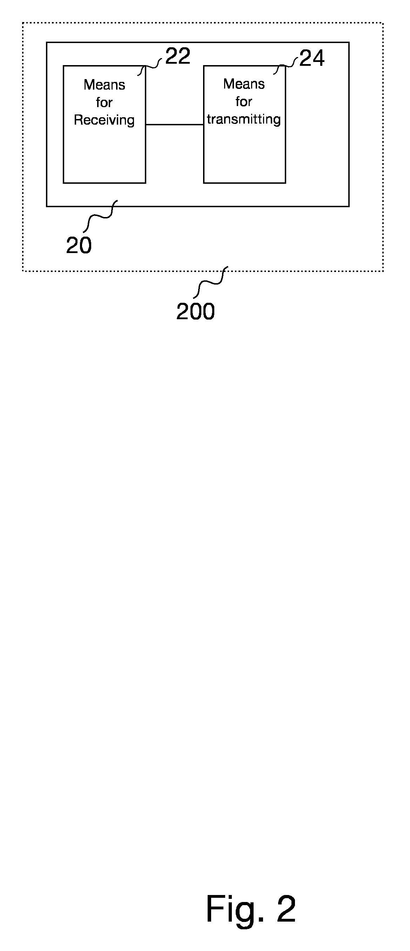

Figure 2 shows an embodiment of an apparatus 20 for a base station transceiver 200. The base station transceiver 200 is shown in dotted lines, as it is optional. Embodiments may provide a base station transceiver 200 comprising a base station transceiver apparatus 20. The base station transceiver 200 is operative in the second frequency layer. The base station transceiver apparatus 20 comprises means for receiving 22 a random access message from a mobile transceiver 100. The random access message can, for example, be received by using a predetermined random access configuration of radio resources of the second frequency layer. Optionally, the means for receiving 22 can be further adapted to receive an indication on whether the mobile transceiver 100 is active on the first frequency layer. The base station transceiver apparatus 20 further comprises means for transmitting 24 a control message on the second layer to the mobile transceiver 100. The control message comprises a random access response or data format information.

In case the mobile transceiver 100 is configured to process the second frequency layer as a first type of frequency layer, e.g. if the mobile transceiver 100 is inactive on the first frequency layer, i.e. if the UE is configured with the second frequency layer as a PCell, the means for transmitting 24 uses, for the transmission of the control message, an encoding combination from a first common set of encoding combinations of the second frequency layer, the first common set of encoding combinations is shared among multiple mobile transceivers, or the means for transmitting 24 uses a first specific set of encoding combinations of the second frequency layer, the first specific set of encoding combinations is specific to the mobile transceiver 100. In case the mobile transceiver 100 is configured to process the second frequency layer as a second type of frequency, layer, e.g. if the mobile transceiver 100 is active on the first frequency layer, i.e. if the UE is configured with the second frequency layer as an SCell, the means for transmitting 24 uses, for the transmission of the control message, an encoding combination from a second common set of encoding combinations of the second frequency layer, the second common set of encoding combinations is shared among multiple mobile transceivers, or the means for transmitting 24 uses a second specific set of encoding combinations of the second frequency layer, the second specific set of encoding combinations is specific to the mobile transceiver. The second specific set of encoding combinations comprises fewer encoding combinations than the first specific set of encoding combinations. In embodiments the first and second common sets of encoding combinations can be equal or different.

In the present embodiment the mobile communication system corresponds to a Long Term Evolution system using the first frequency layer as a first carrier and the second frequency layer as a second carrier. From the mobile transceiver apparatus' 10 perspective, the predefined random access configuration of radio resources of the first frequency layer corresponds to a PRACH. The common set of decoding combinations on the first carrier corresponds to a CSS of a PDCCH on the first carrier. The specific set of decoding combinations on the first carrier corresponds to a UESS of the PDCCH of the first carrier. The common set of decoding combinations on the second carrier corresponds to a CSS of a PDCCH on the second carrier. The specific set of decoding combinations on the second carrier corresponds to a UESS of the PDCCH of the second carrier.

Thus, from the base station transceiver apparatus' 20 perspective, the first common set of encoding combinations on the second carrier corresponds to the CSS of the PDCCH of the second carrier, the first specific set of encoding combinations on the second carrier corresponds to a first UESS of the PDCCH of the second carrier when the base station 200 is a PCell, the second common set of encoding combinations on the second carrier corresponds to the CSS of the PDCCH of the second carrier, the second specific set of encoding combinations on the second carrier corresponds to a second UESS of the PDCCH of the second carrier, when the base station transceiver is a SCell.

In embodiments the limiting of the second specific set of encoding combinations from the base station transceiver's 200 perspective and the specific set of decoding combinations on the second frequency layer from the mobile transceiver's 100 perspective can be done by several ways. The number of blind decoding attempts, i.e. the size of a set of encoding or decoding combinations is a function of the number of Downlink Control Information (DCI) format lengths to be monitored, which is related to the number of DCI formats to be monitored and the number of PDCCH candidates at each monitored aggregation level. The aggregation level determines the number of CCEs used per PDCCH candidate.

The search spaces comprise a number of PDCCH candidates as CCH candidates and each candidate corresponds to a number of CCE and each CCE is mapped to a set of combinations of subcarriers and time slots or symbols.

For the UESS, 2 format lengths (6, 2) and 4 different aggregation levels (1, 2, 4, and 8) are to be decoded in the conventional system, which is shown in the following table:

| **Search space Sₖ^{(L)}** | | | **Number of PDCCH candidates *M^{(L)}*** |
|---|---|---|---|
| **Type** | **Aggregation level *L*** | **Size [in CCEs]** | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

Hence, there are several ways of reducing the number of blind decoding attempts for UE specific search space:

In a first embodiment, a first way lies in limiting the number of format lengths to be decoded in the UESS. In other words, from the mobile transceiver apparatus' 10 perspective the PDCCH candidates for the UESS of the PDCCH of the second carrier have fewer format lengths than the PDCCH candidates for the UESS of the PDCCH of the first carrier. In other words, the UE searches fewer combinations on the second frequency layer, because there are less format lengths.

From the base station transceiver apparatus' 20 perspective, PDCCH candidates for the second UESS (SCell) of the PDCCH of the second carrier have a format length, which is shorter than a format length of the PDCCH candidates for the first UESS (PCell) of the PDCCH of the second carrier.

In a second embodiment, a second way lies in limiting the number of aggregation levels in the UESS. Thus, from the mobile transceiver apparatus' 10 perspective, the PDCCH candidates for the UESS of the PDCCH of the second carrier have fewer CCE aggregation levels than the PDCCH candidates for the UESS of the PDCCH of the first carrier. From the base station transceiver apparatus' 20 perspective, the PDCCH candidates for the second UESS (SCell) of the PDCCH of the second carrier have fewer CCE aggregation levels than the PDCCH candidates for the first UESS (PCell) of the PDCCH.

In a third embodiment, a third way lies in limiting the number of candidates to be searched at one or more aggregation levels in the UESS. Hence, from the mobile transceiver apparatus' 10 perspective, there are fewer PDCCH candidates for the UESS of the PDCCH of the second carrier than PDCCH candidates for the UESS of the PDCCH of the first carrier. From the base station transceiver apparatus' 20 perspective, there are fewer PDCCH candidates for the second UESS (SCell) of the PDCCH of the second carrier than PDCCH candidates for the first UESS (PCell) of the PDCCH of the second carrier.

In the case of the non-contention-based random access procedure, the eNB knows the identity of the UE performing the RA, and can avoid scheduling PDCCH messages to that UE in the restricted part of the UESS (i.e. avoiding certain DCI format lengths, aggregation levels or candidates) in the sub-frame in which the random access response is sent.

In other words, in a case of a contention-based RA procedure, the eNB or base station will not know which UE is sending the PRACH preamble, and would therefore have a couple of options in embodiments. The eNB could avoid using restricted parts of the UESS of all UEs, whenever a random access response is sent. In other words, the base station transceiver apparatus 20 can be adapted to limited UESS for all mobile transceivers during a RA procedure. The eNB could avoid using the restricted parts of the UESS of a UE whose Timing Advance Timer had expired, for all sub-frames until the UE successfully completes a full contention based random access procedure including contention resolution. Thus the eNB would make sure, that the restricted decoding combinations would not be used until a UE has completed the RA procedure on that frequency layer.

Embodiments can be applied to a Non-Contention Based Random Access Procedure (NCBRAP) and to Contention Based Random Access Procedure (CBRAP). In the NCBRAP case the restriction in the UESS is better constrained, since the RA is initiated by the base station transceiver.

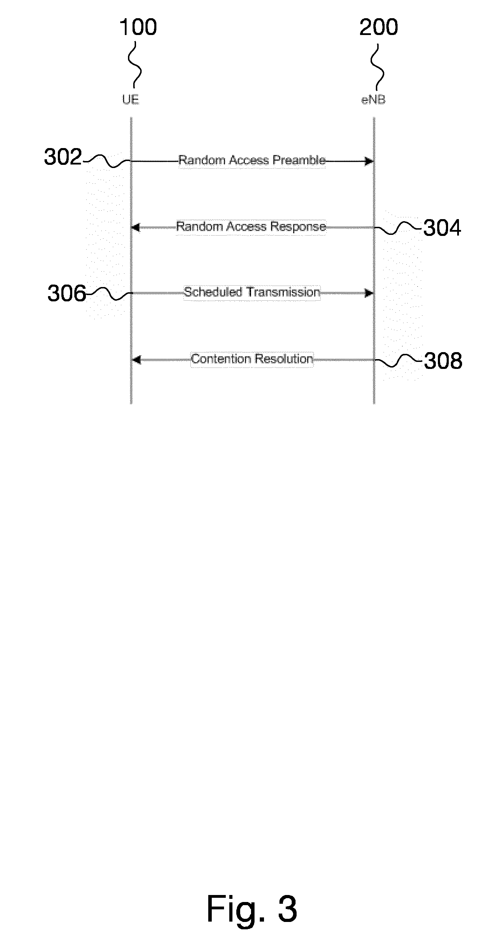

The Contention based Random Access procedure is shown in Figure 3, which depicts a message sequence chart of a random access in an embodiment. The messages are exchanged between an embodiment of a mobile transceiver or a UE 100 on the left hand side and an embodiment of a base station transceiver or eNB 200 on the right hand side. The CBRAP will be explained using the following four steps; the NCBRAP does not have the last two steps. In line with Figure 3, in the first step 302 the random access preamble is selected and is sent to the SCell 200 of concern, i.e. on the second frequency layer from the UE 100 perspective. From the base station transceiver's 200 perspective the UE 100 is already active in another frequency layer (PCell), thus the base station transceiver 200 acts as SCell. In the second step 304 the UE 100 waits for the Random Access Response (RAR) message from the SCell of the eNB 200 by monitoring the RA-RNTI on the common search space and C-RNTI on the reduced UE specific search space. Upon receiving the RAR message in the random access response window, the UE 100 stops monitoring the common search space on the SCell but restarts monitoring the complete UE specific search space prior to the initiation of the random access procedure.

In a third step 306 a scheduled transmission is sent using an uplink grant provided with the RAR and in the fourth step 308 contention resolution is carried out, before the eNB 200 is free to use the restricted part of this UE's 100 UESS again.

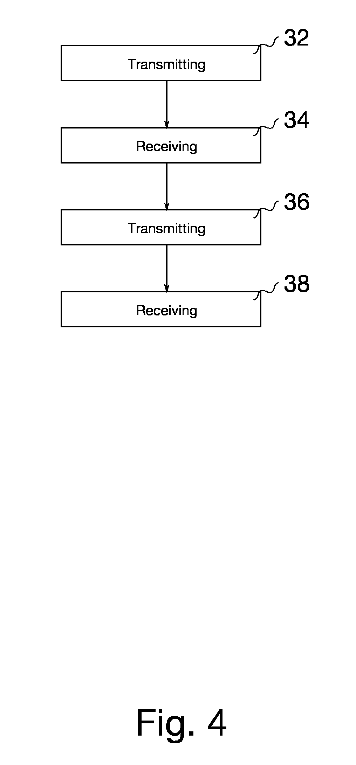

Figure 4 shows a block diagram of a flow chart of an embodiment of a method for a mobile transceiver 100 in a mobile communication system. The mobile communication system is operative at a first frequency layer and at a second frequency layer. The mobile transceiver 100 can, for example, be located in the coverage area of the first frequency layer and in the coverage area of the second frequency layer. The method can comprise an optional step of transmitting 32 a random access message, e.g. on the first frequency layer using a predetermined random access configuration of radio resources of the first frequency layer. The method comprises a step of receiving 34 a control message on the first frequency layer by searching through a predetermined common set of decoding combinations of the first frequency layer, the common set of decoding combinations is shared with other mobile transceivers on the first frequency layer, and by searching through a predetermined specific set of decoding combinations of the first frequency layer, the specific set of decoding combinations is specific to the mobile transceiver 100 on the first frequency layer. The control message comprises a random access response or data format information.

The method further comprises transmitting 36 a random access message, e.g. on the second frequency layer using a predetermined random access configuration of radio resources of the second frequency layer. The method comprises a further step of receiving 38 on the second frequency layer another control message associated with the random access message by searching through a predetermined common set of decoding combinations of the second frequency layer, the common set of decoding combinations of the second frequency layer is shared with other mobile transceivers on the second frequency layer, and by searching through a predetermined specific set of decoding combinations of the second frequency layer, the specific set of decoding combinations on the second frequency layer is specific to the mobile transceiver 100 on the second frequency layer. The specific set of decoding combinations on the second frequency layer comprises fewer decoding combinations than the specific set of combinations on the first frequency layer. The other control message comprising another random access response or other data format information.

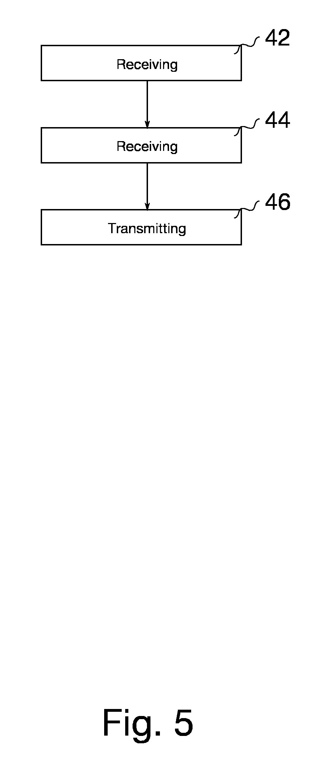

Figure 5 shows a block diagram of a flow chart of an embodiment of a method for a base station transceiver 200 in a mobile communication system. The mobile communication system is operative at a first frequency layer and at a second frequency layer. The base station transceiver 200 is operative in the second frequency layer. The method comprises a step of receiving 42 a random access message from a mobile transceiver 100. The receiving may use a predetermined random access configuration of radio resources of the second frequency layer. Optionally, the method comprises a further step of receiving 44 an indication on whether the mobile transceiver 100 is active on the first frequency layer.

The method comprises a step of transmitting 46 a control message on the second layer to the mobile transceiver 100. The control message comprises a random access response or data format information. In case the mobile transceiver 100 is configured to process the second frequency layer as a first type of frequency layer, e.g. in case the mobile transceiver 100 is inactive on the first frequency layer, the transmitting 46 uses an encoding combination from a first common set of encoding combinations of the second frequency layer, the first common set of encoding combinations is shared among multiple mobile transceivers, or the transmitting 46 uses a first specific set of encoding combinations of the second frequency layer, the first specific set of encoding combinations is specific to the mobile transceiver 100.

In case the mobile transceiver 100 is configured to process the second frequency layer as a second type of frequency layer, e.g in case the mobile transceiver 100 is active on the first frequency layer, the transmitting 46 uses an encoding combination from a second common set of encoding combinations of the second frequency layer, the second common set of encoding combinations is shared among multiple mobile transceivers, or the transmitting 46 uses a second specific set of encoding combinations of the second frequency layer, the second specific set of encoding combinations is specific to the mobile transceiver 100. The second specific set of encoding combinations comprises fewer encoding combinations than the first specific set of encoding combinations.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for transmitting", "means for receiving", etc., may be provided through the use of dedicated hardware, such as "a transmitter", "a receiver" etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a mobile transceiver (100) in a mobile communication system, the mobile communication system being operative at a first frequency layer and at a second frequency layer, the apparatus (10) comprising
means for receiving (14) a control message on the first frequency layer by searching through a predetermined common set of decoding combinations of the first frequency layer, the common set of decoding combinations being shared with other mobile transceivers on the first frequency layer, and by searching through a predetermined specific set of decoding combinations of the first frequency layer, the specific set of decoding combinations being specific to the mobile transceiver (100) on the first frequency layer, the control message comprising a random access response or data format information; and
means for transmitting (12) a random access message, and
wherein the means for receiving (14) is further adapted to receive on the second frequency layer another control message associated with the random access message by searching through a predetermined common set of decoding combinations of the second frequency layer, the common set of decoding combinations of the second frequency layer being shared with other mobile transceivers on the second frequency layer, and by searching through a predetermined specific set of decoding combinations of the second frequency layer, the specific set of decoding combinations on the second frequency layer being specific to the mobile transceiver (100) on the second frequency layer,
wherein the specific set of decoding combinations on the second frequency layer comprises fewer decoding combinations than the specific set of combinations on the first frequency layer.

2. The apparatus (10) of claim 1, wherein the mobile communication system corresponds to a Long Term Evolution or a Long Term Evolution-Advanced system using the first frequency layer as a first carrier and the second frequency layer as a second carrier, wherein the predefined random access configuration of radio resources of the first frequency layer corresponds to a Physical Random Access Channel, wherein the common set of decoding combinations on the first carrier corresponds to a common search space of a Physical Downlink Control Channel on the first carrier, and wherein the specific set of decoding combinations on the first carrier corresponds to a user equipment specific search space of the Physical Downlink Control Channel of the first carrier, wherein the common set of decoding combinations on the second carrier corresponds to a common search space of a Physical Downlink Control Channel on the second carrier, and/or wherein the specific set of decoding combinations on the second carrier corresponds to a user equipment specific search space of the Physical Downlink Control Channel of the second carrier.

3. The apparatus (10) of claim 1, wherein the search spaces comprise a number of Control Channel candidates, wherein each candidate corresponds to a number of control channel elements and wherein each control channel element is mapped to a set of combinations of subcarriers and symbols.

4. The apparatus (10) of claim 3, wherein the Control Channel candidates for the user equipment specific search space of the Control Channel of the second frequency layer have fewer format lengths than the Control Channel candidates for the user equipment specific search space of the Control Channel of the first frequency layer.

5. The apparatus (10) of claim 3, wherein the Control Channel candidates for the user equipment specific search space of the Control Channel of the second frequency layer have fewer channel element aggregation levels than the Control Channel candidates for the user equipment specific search space of the Control Channel of the first frequency layer.

6. The apparatus (10) of claim 3, wherein there are fewer Control Channel candidates for the user equipment specific search space of the Control Channel of the second frequency layer than Control Channel candidates for the user equipment specific search space of the Control Channel of the first frequency layer.

7. An apparatus (20) for a base station transceiver (200) in a mobile communication system, the mobile communication system being operative at a first frequency layer and at a second frequency layer, the base station transceiver (200) being operative in the second frequency layer, the apparatus (20) comprising
means for receiving (22) a random access message from a mobile transceiver (100); and
means for transmitting (24) a control message on the second layer to the mobile transceiver (100), the control message comprising a random access response or data format information,
in case the mobile transceiver (100) is configured to process the second frequency layer as a first type of frequency layer,
using an encoding combination from a first common set of encoding combinations of the second frequency layer, the first common set of encoding combinations being shared among multiple mobile transceivers, or by using a first specific set of encoding combinations of the second frequency layer, the first specific set of encoding combinations being specific to the mobile transceiver (100); and
in case the mobile transceiver (100) is configured to process the second frequency layer as a second type of frequency layer,
using an encoding combination from a second common set of encoding combinations of the second frequency layer, the second common set of encoding combinations being shared among multiple mobile transceivers, or by using a second specific set of encoding combinations of the second frequency layer, the second specific set of encoding combinations being specific to the mobile transceiver (100),
wherein the second specific set of encoding combinations comprises fewer encoding combinations than the first specific set of encoding combinations.

8. The apparatus (20) of claim 7, wherein the mobile communication system corresponds to a Long Term Evolution or a Long Term Evolution-Advanced system using the first frequency layer as a first carrier and the second frequency layer as a second carrier, wherein the predefined random access configuration of radio resources of the second frequency layer corresponds to a Physical Random Access Channel, wherein the first common set of encoding combinations on the second carrier corresponds to a common search space of a Physical Downlink Control Channel of the second carrier, and wherein the first specific set of encoding combinations on the second carrier corresponds to a first user equipment specific search space of the Physical Downlink Control Channel of the second carrier, wherein the second common set of encoding combinations on the second carrier corresponds to the common search space of the Physical Downlink Control Channel of the second carrier, and/or wherein the second specific set of encoding combinations on the second carrier corresponds to a second user equipment specific search space of the Physical Downlink Control Channel of the second carrier.

9. The apparatus (20) of claim 7, wherein the search spaces correspond to a number of Control Channel candidates, wherein each candidate corresponds to a number of control channel elements and wherein each control channel element is mapped to a set of combinations of subcarriers and symbols.

10. The apparatus (20) of claim 7, wherein the Control Channel candidates for the second user equipment specific search space of the Control Channel of the second frequency layer have fewer format lengths than the Control Channel candidates for the first user equipment specific search space of the Control Channel of the second frequency layer.

11. The apparatus (20) of claim 7, wherein the Control Channel candidates for the second user equipment specific search space of the Control Channel of the second frequency layer have fewer channel element aggregation levels than the Control Channel candidates for the first user equipment specific search space of the Control Channel of the second frequency layer.

12. The apparatus (20) of claim 7, wherein there are fewer Control Channel candidates for the second user equipment specific search space of the Control Channel of the second frequency layer than Control Channel candidates for the first user equipment specific search space of the Control Channel of the second frequency layer.

13. A method for a mobile transceiver in a mobile communication system, the mobile communication system being operative at a first frequency layer and at a second frequency layer, the method comprising
receiving (34) a control message on the first frequency layer by searching through a predetermined common set of decoding combinations of the first frequency layer, the common set of decoding combinations being shared with other mobile transceivers on the first frequency layer, and by searching through a predetermined specific set of decoding combinations of the first frequency layer, the specific set of decoding combinations being specific to the mobile transceiver (100) on the first frequency layer, the control message comprising a random access response or data format information;
transmitting (36) a random access message; and
receiving (38) on the second frequency layer another control message associated with the random access message by searching through a predetermined common set of decoding combinations of the second frequency layer, the common set of decoding combinations of the second frequency layer being shared with other mobile transceivers on the second frequency layer, and by searching through a predetermined specific set of decoding combinations of the second frequency layer, the specific set of decoding combinations on the second frequency layer being specific to the mobile transceiver (100) on the second frequency layer,
wherein the specific set of decoding combinations on the second frequency layer comprises fewer decoding combinations than the specific set of combinations on the first frequency layer.

14. A method for a base station transceiver (200) in a mobile communication system, the mobile communication system being operative at a first frequency layer and at a second frequency layer, the base station transceiver (200) being operative in the second frequency layer, the method comprising receiving (42) a random access message from a mobile transceiver (100); transmitting (46) a control message on the second layer to the mobile transceiver (100), the control message comprising a random access response or data format information,
in case the mobile transceiver (100) is configured to process the second frequency layer as a first type of frequency layer,
using an encoding combination from a first common set of encoding combinations of the second frequency layer, the first common set of encoding combinations being shared among multiple mobile transceivers, or by using a first specific set of encoding combinations of the second frequency layer, the first specific set of encoding combinations being specific to the mobile transceiver (100); and
in case the mobile transceiver (100) is configured to process the second frequency layer as a second type of frequency layer,
using an encoding combination from a second common set of encoding combinations of the second frequency layer, the second common set of encoding combinations being shared among multiple mobile transceivers, or by using a second specific set of encoding combinations of the second frequency layer, the second specific set of encoding combinations being specific to the mobile transceiver (100),
wherein the second specific set of encoding combinations comprises fewer encoding combinations than the first specific set of encoding combinations.

15. A computer program having a program code for performing one of the methods of claims 13 or 14, when the computer program is executed on a computer or processor.

## Amended claims

### Amended claims in accordance with Rule 137(2) EPC.

**1.** An apparatus (10) for a mobile transceiver (100) for a mobile communication system, the mobile communication system being operative at a first frequency layer and at a second frequency layer, the apparatus (10) comprising
means for receiving (14) a control message on the first frequency layer by searching through a predetermined common set of decoding combinations of the first frequency layer, the common set of decoding combinations being shared with other mobile transceivers on the first frequency layer, and by searching through a predetermined specific set of decoding combinations of the first frequency layer, the specific set of decoding combinations being specific to the mobile transceiver (100) on the first frequency layer, the control message comprising a random access response or data format information; and
means for transmitting (12) a random access message, and
wherein the means for receiving (14) is further adapted to receive on the second frequency layer another control message associated with the random access message by searching through a predetermined common set of decoding combinations of the second frequency layer, the common set of decoding combinations of the second frequency layer being shared with other mobile transceivers on the second frequency layer, and by searching through a predetermined specific set of decoding combinations of the second frequency layer, the specific set of decoding combinations on the second frequency layer being specific to the mobile transceiver (100) on the second frequency layer,
wherein the specific set of decoding combinations on the second frequency layer comprises fewer decoding combinations than the specific set of combinations on the first frequency layer.

**2.** The apparatus (10) of claim 1, wherein the mobile communication system corresponds to a Long Term Evolution or a Long Term Evolution-Advanced system using the first frequency layer as a first carrier and the second frequency layer as a second carrier, wherein a predefined random access configuration of radio resources of the first frequency layer corresponds to a Physical Random Access Channel, wherein the common set of decoding combinations on the first carrier corresponds to a common search space of a Physical Downlink Control Channel on the first carrier, and wherein the specific set of decoding combinations on the first carrier corresponds to a user equipment specific search space of the Physical Downlink Control Channel of the first carrier, wherein the common set of decoding combinations on the second carrier corresponds to a common search space of a Physical Downlink Control Channel on the second carrier, and/or wherein the specific set of decoding combinations on the second carrier corresponds to a user equipment specific search space of the Physical Downlink Control Channel of the second carrier.

**3.** The apparatus (10) of claim 2, wherein the search spaces comprise a number of Control Channel candidates, wherein each candidate corresponds to a number of control channel elements and wherein each control channel element is mapped to a set of combinations of subcarriers and symbols.

**4.** The apparatus (10) of claim 3, wherein the Control Channel candidates for the user equipment specific search space of the Control Channel of the second frequency layer have fewer format lengths than the Control Channel candidates for the user equipment specific search space of the Control Channel of the first frequency layer.

**5.** The apparatus (10) of claim 3, wherein the Control Channel candidates for the user equipment specific search space of the Control Channel of the second frequency layer have fewer channel element aggregation levels than the Control Channel candidates for the user equipment specific search space of the Control Channel of the first frequency layer.

**6.** The apparatus (10) of claim 3, wherein there are fewer Control Channel candidates for the user equipment specific search space of the Control Channel of the second frequency layer than Control Channel candidates for the user equipment specific search space of the Control Channel of the first frequency layer.

**7.** An apparatus (20) for a base station transceiver (200) for a mobile communication system, the mobile communication system being operative at a first frequency layer and at a second frequency layer, the base station transceiver (200) being operative in the second frequency layer, the apparatus (20) comprising
means for receiving (22) a random access message from a mobile transceiver (100); and
means for transmitting (24) a control message on the second layer to the mobile transceiver (100), the control message comprising a random access response or data format information,
in case the mobile transceiver (100) is configured to process the second frequency layer as a first type of frequency layer,
using an encoding combination from a first common set of encoding combinations of the second frequency layer, the first common set of encoding combinations being shared among multiple mobile transceivers, or by using a first specific set of encoding combinations of the second frequency layer, the first specific set of encoding combinations being specific to the mobile transceiver (100); and
in case the mobile transceiver (100) is configured to process the second frequency layer as a second type of frequency layer,
using an encoding combination from a second common set of encoding combinations of the second frequency layer, the second common set of encoding combinations being shared among multiple mobile transceivers, or by using a second specific set of encoding combinations of the second frequency layer, the second specific set of encoding combinations being specific to the mobile transceiver (100),
wherein the second specific set of encoding combinations comprises fewer encoding combinations than the first specific set of encoding combinations.

**8.** The apparatus (20) of claim 7, wherein the mobile communication system corresponds to a Long Term Evolution or a Long Term Evolution-Advanced system using the first frequency layer as a first carrier and the second frequency layer as a second carrier, wherein a predefined random access configuration of radio resources of the second frequency layer corresponds to a Physical Random Access Channel, wherein the first common set of encoding combinations on the second carrier corresponds to a common search space of a Physical Downlink Control Channel of the second carrier, and wherein the first specific set of encoding combinations on the second carrier corresponds to a first user equipment specific search space of the Physical Downlink Control Channel of the second carrier, wherein the second common set of encoding combinations on the second carrier corresponds to the common search space of the Physical Downlink Control Channel of the second carrier, and/or wherein the second specific set of encoding combinations on the second carrier corresponds to a second user equipment specific search space of the Physical Downlink Control Channel of the second carrier.

**9.** The apparatus (20) of claim 8, wherein the search spaces correspond to a number of Control Channel candidates, wherein each candidate corresponds to a number of control channel elements and wherein each control channel element is mapped to a set of combinations of subcarriers and symbols.

**10.** The apparatus (20) of claim 9, wherein the Control Channel candidates for the second user equipment specific search space of the Control Channel of the second frequency layer have fewer format lengths than the Control Channel candidates for the first user equipment specific search space of the Control Channel of the second frequency layer.

**11.** The apparatus (20) of claim 9, wherein the Control Channel candidates for the second user equipment specific search space of the Control Channel of the second frequency layer have fewer channel element aggregation levels than the Control Channel candidates for the first user equipment specific search space of the Control Channel of the second frequency layer.

**12.** The apparatus (20) of claim 9, wherein there are fewer Control Channel candidates for the second user equipment specific search space of the Control Channel of the second frequency layer than Control Channel candidates for the first user equipment specific search space of the Control Channel of the second frequency layer.

**13.** A method for a mobile transceiver for a mobile communication system, the mobile communication system being operative at a first frequency layer and at a second frequency layer, the method comprising
receiving (34) a control message on the first frequency layer by searching through a predetermined common set of decoding combinations of the first frequency layer, the common set of decoding combinations being shared with other mobile transceivers on the first frequency layer, and by searching through a predetermined specific set of decoding combinations of the first frequency layer, the specific set of decoding combinations being specific to the mobile transceiver (100) on the first frequency layer, the control message comprising a random access response or data format information;
transmitting (36) a random access message; and
receiving (38) on the second frequency layer another control message associated with the random access message by searching through a predetermined common set of decoding combinations of the second frequency layer, the common set of decoding combinations of the second frequency layer being shared with other mobile transceivers on the second frequency layer, and by searching through a predetermined specific set of decoding combinations of the second frequency layer, the specific set of decoding combinations on the second frequency layer being specific to the mobile transceiver (100) on the second frequency layer,
wherein the specific set of decoding combinations on the second frequency layer comprises fewer decoding combinations than the specific set of combinations on the first frequency layer.

**14.** A method for a base station transceiver (200) for a mobile communication system, the mobile communication system being operative at a first frequency layer and at a second frequency layer, the base station transceiver (200) being operative in the second frequency layer, the method comprising
receiving (42) a random access message from a mobile transceiver (100);
transmitting (46) a control message on the second layer to the mobile transceiver (100), the control message comprising a random access response or data format information,
in case the mobile transceiver (100) is configured to process the second frequency layer as a first type of frequency layer,
using an encoding combination from a first common set of encoding combinations of the second frequency layer, the first common set of encoding combinations being shared among multiple mobile transceivers, or by using a first specific set of encoding combinations of the second frequency layer, the first specific set of encoding combinations being specific to the mobile transceiver (100); and
in case the mobile transceiver (100) is configured to process the second frequency layer as a second type of frequency layer,
using an encoding combination from a second common set of encoding combinations of the second frequency layer, the second common set of encoding combinations being shared among multiple mobile transceivers, or by using a second specific set of encoding combinations of the second frequency layer, the second specific set of encoding combinations being specific to the mobile transceiver (100),
wherein the second specific set of encoding combinations comprises fewer encoding combinations than the first specific set of encoding combinations.

**15.** A computer program having a program code for performing one of the methods of claims 13 or 14, when the computer program is executed on a computer or processor.
